# EUROPEAN PATENT SPECIFICATION

(11) **EP 3 352 009 B1**
(45) Date of publication and mention of the grant of the patent: **04.09.2019**
(21) Application number: 16845912.1
(22) Date of filing: 05.09.2016
(51) Int. Cl.: G03B 17/56, G03B 15/00, H04N 5/222

(54) **HOLDING STRUCTURE AND ELECTRIC DEVICE**
HALTESTRUKTUR UND ELEKTRONISCHE VORRICHTUNG
STRUCTURE DE MAINTIEN ET DISPOSITIF ÉLECTRIQUE

(30) Priority: 18.09.2015 JP 2015185735
(43) Date of publication of application: 25.07.2018
(73) Proprietor: Panasonic Intellectual Property Management Co., Ltd., Osaka-shi, Osaka 540-6207 (JP)
(72) Inventor: YOKOTA, Hirosi, Osaka-shi, Osaka 540-6207 (JP); YOSHIKI, Kazuhisa, Osaka-shi, Osaka 540-6207 (JP); NAGAI, Shoji, Osaka-shi, Osaka 540-6207 (JP)
(74) Representative: Appelt, Christian W.
(86) International application number: PCT/JP2016/004037
(87) International publication number: WO 2017/047035

(56) References cited:
- WO-A1-2012/004952
- WO-A1-2012/004994
- JP-A- H0 751 393
- JP-A- H0 780 156
- JP-A- 2001 135 707
- JP-A- 2002 076 030
- JP-A- 2009 247 211
- US-A1- 2007 114 346
- US-A1- 2009 196 597
- US-A1- 2015 198 865

## Description

### Technical Field

The invention relates to a holding structure and an electric device.

### Background Art

Patent Document 1 discloses a configuration as a related art for adjusting a panning angle of a camera.

The related art is provided with a fit member that is detachably fitted between respective sides of a rotation axis and a camera body thereof with a relative angle therebetween being adjustable. The rotation axis and the camera body have their respective facing ends which face each other, each of which is provided with an engaging member having teeth that are arranged annularly and extend radially so that respective teeth of the engaging members of the rotation axis and the camera body engage with each other. The related art is also provided with a connection member that fixes the rotation axis and the camera body with their respective teeth of the engaging members engaged with each other at an arbitrary angle.

The related art however requires a user to release the engagement between the engaging members while maintaining a fitting state in the fit member and adjust an angel between the camera body and the rotation axis again when an image capturing range of the camera is inadequate. The user further needs to make the engaging members engage again after adjusting the angel between the camera body and the rotation axis again. The user needs to repeat such adjustment work until the image capturing range of the camera is an adequate range, thus making it difficult to adjust the mage capturing range of the camera.

That is, the related art had a problem requiring complicated adjustment work of a mounting angle of an electric device such as a camera.

US 2007/114346 A1 discloses a magnetic mounting assembly including a positioning element with a magnetizable ball attached to the positionable object.

US 2015/0198865 A1 discloses camera device comprising a base with a fillister, a body with a spherical unit and a neck, and a camera configured onto the body.

US 2009/196597 A1 discloses a magnetic mount having a camera part that has an image sensor, electronics, battery, and communication components.

### Citation List

### Patent Literature

Patent Document 1: JP H4-296736 A

### Summary of Invention

It is an object of the present invention to provide a holding structure capable of facilitating adjustment of a mounting angle of an electric device, and the electric device.

A holding structure according to an aspect of the present invention includes an electric device and a holding member configured to hold the electric device. The electric device includes a casing and a magnet unit disposed in the casing. The holding member includes a connection unit displaying magnetism. The magnet unit includes a magnet, and a yoke magnetically coupled with the magnet to form a magnetic path from the magnet to a surface of the casing. The holding member is configured to hold the electric device with the yoke magnetically coupled with the connection unit. An elastic member is provided as part of the casing and configured to be in contact with the connection unit.

An electric device according to an aspect of the present invention is configured to be held by a holding member comprising a connection unit displaying magnetism. The electric device includes a casing, and a magnet unit disposed in the casing. The magnet unit includes a magnet, and a yoke magnetically coupled with the magnet to form a magnetic path from the magnet to a surface of the casing. An elastic member is provided as part of the casing and configured to be in contact with the connection unit.

### Brief Description of Drawings

FIG. 1 is a sectional view of an electric device holding structure in accordance with an embodiment;
FIG. 2 is an exploded perspective view of an electric device in the electric device holding structure;
FIG. 3 is an exploded perspective view of a holding member in the electric device holding structure;
FIG. 4 is a full front perspective view of the electric device holding structure;
FIG. 5 is a full back perspective view of the electric device holding structure;
FIG. 6 is a front view of the electric device;
FIG. 7 is a cross-section taken along an X1-X2 line showing the electric device;
FIG. 8 is a longitudinal section taken along an X3-X4 line showing the electric device;
FIG. 9 is a front view of a bracket in the electric device holding structure;
FIG. 10 is a side view of the bracket;
FIG. 11 is a front view of a base in the electric device holding structure;
FIG. 12 is a perspective view of the base;
FIG. 13 is a perspective view of ribs provided on an opening edge in the electric device holding structure;
FIG. 14 is a sectional view showing a magnetic path in the electric device holding structure; and
FIG. 15 is a perspective view of another aspect of the holding member.

### Description of Embodiments

An embodiment relates to holding structures and electric devices and, more particularly, to a holding structure including an electric device and a holding member, and the electric device held by the holding structure.

The embodiment will hereinafter be explained with reference to drawings.

### (Embodiment)

The present embodiment is an electric device holding structure 100 in which an electric device A1 is held by a holding member B1. The electric device A1 and the holding member B1 constitute electric equipment.

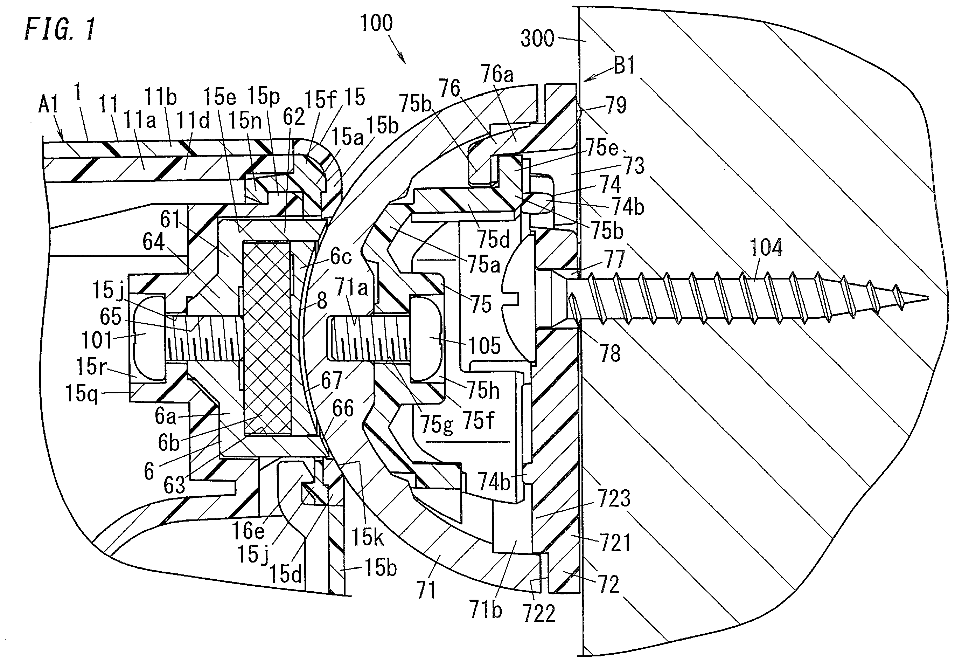

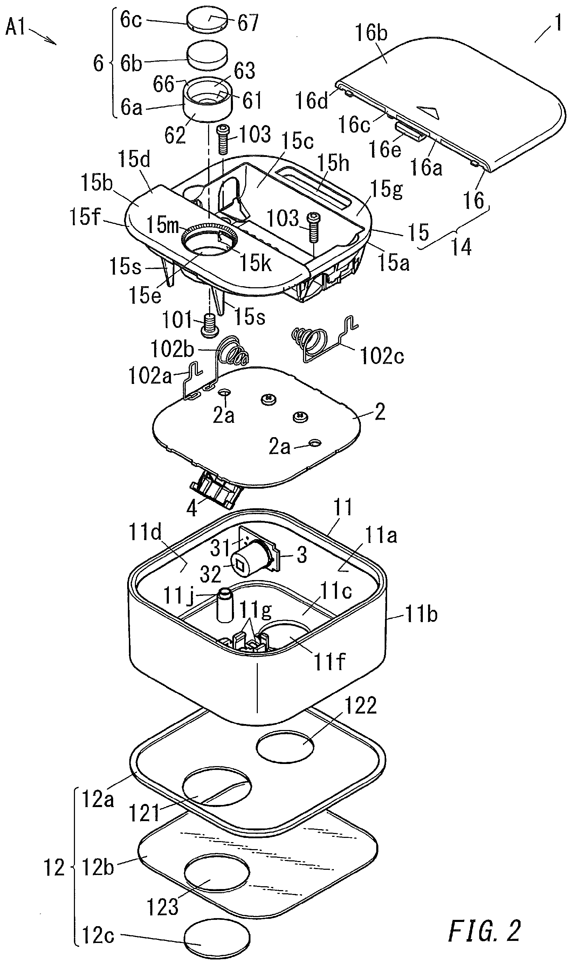

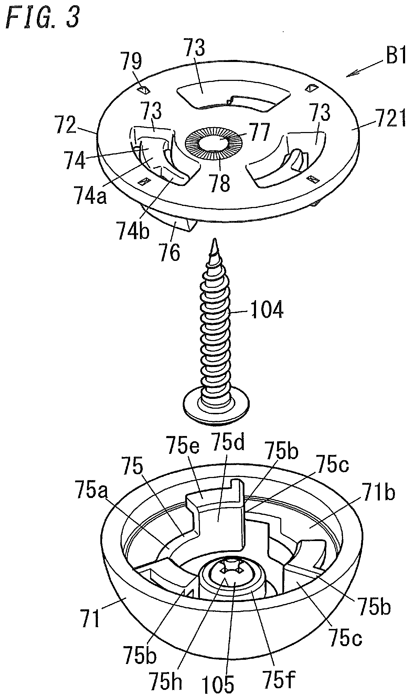

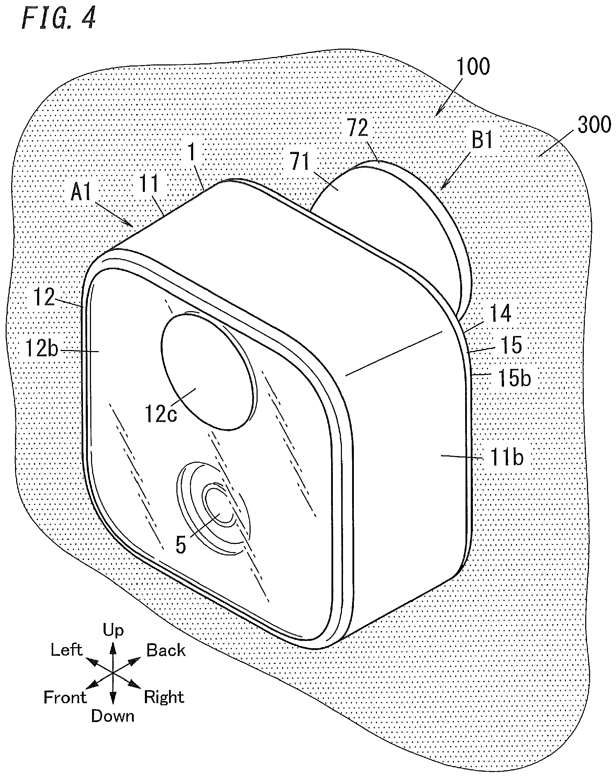

FIG. 1 is a sectional view of main part of the holding structure 100 according to the embodiment. FIG. 2 is an exploded perspective view of the electric device A1. FIG. 3 is an exploded perspective view of the holding member B1. FIG. 4 is a full front perspective view of the electric device A1 held by a holding member B1. Note that up-down, left-right and front-back directions in the explanation below are based on an up-down direction (or top-bottom direction), a left-right direction and a front-back direction depicted by arrows in FIG. 4.

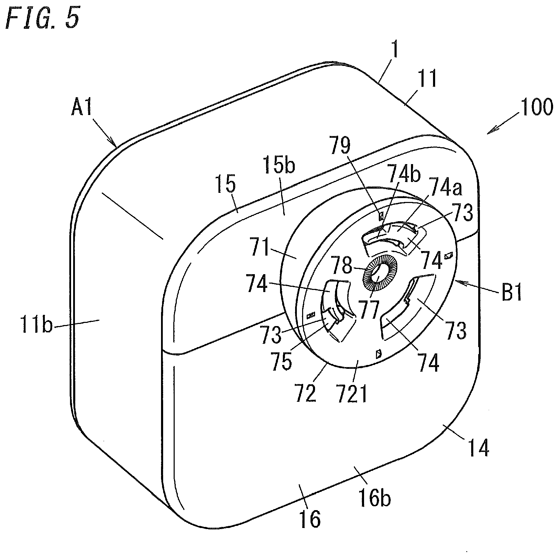

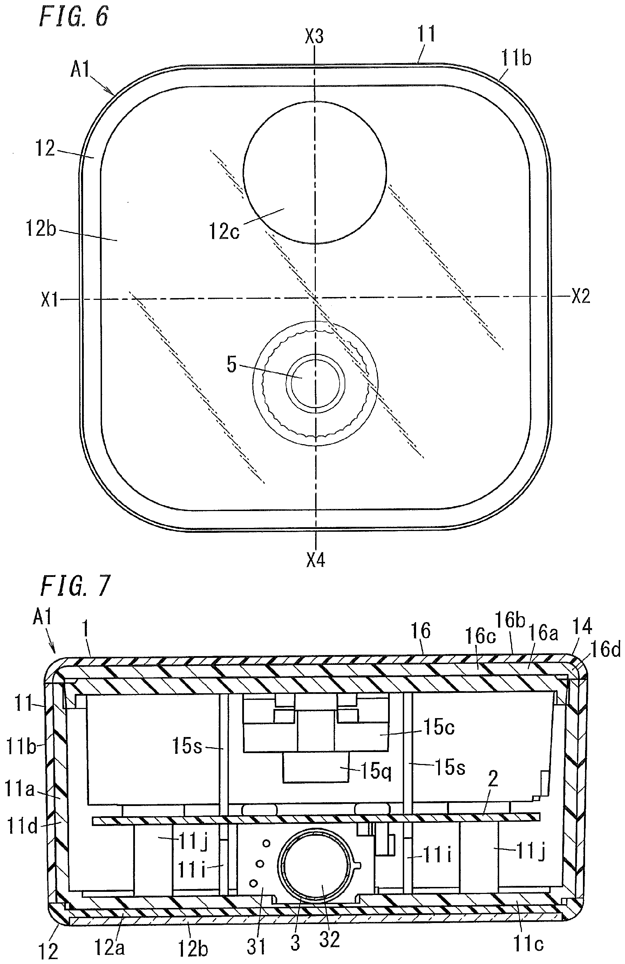

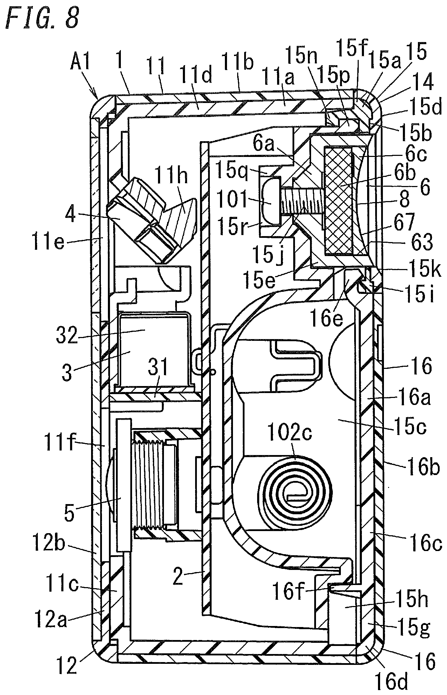

FIG. 5 is a full back perspective view of the electric device A1 held by the holding member B1. FIG. 6 is a front view of the electric device A1. FIG. 7 is a cross-section taken along an X1-X2 line in FIG. 6 as viewed from bottom. FIG. 8 is a longitudinal section taken along an X3-X4 line in FIG. 6 as viewed from left.

The electric device A1 according to the embodiment includes a casing 1, a main substrate 2, a sensor unit 3, a mirror 4 and a magnet unit 6. The casing 1 has a rectangular box shape, and accommodates the main substrate 2, the sensor unit 3, the mirror 4 and the magnet unit 6. An image capture unit 5, a control circuit, a wireless communication circuit, an antenna and the like are mounted on the main substrate 2. The electric device A1 may perform both human detection processing with the sensor unit 3 and image capture processing with the image capture unit 5 and then transmit a wireless signal containing captured image data. That is, the electric device A1 according to the embodiment functions as the wireless communication circuit, an image capture device or a sensor device. The electric device A1 according to the embodiment is to operate by a battery as a power supply.

The casing 1 is configured by combining a casing body 11, a front cover 12 and a back cover 14.

The casing body 11 is formed by two color molding (double-molding). Specifically, the casing body 11 is formed by covering part of the outside of a core member 11a with an elastic member 11b. The core member 11a is made from polycarbonate, while the elastic member 11b is made from polyester based elastomer. The core member 11a has a front wall 11c and side walls 11d. The front wall 11c is rectangular in shape, and the side walls 11d protrude backward from a periphery of the front wall 11c, thereby forming the core member 11a into a rectangular box shape with a back opening. The elastic member 11b covers respective outsides of the side walls 11d with respective back ends of the elastic member 11b being longer towards the back than respective back ends of the side walls 11d. That is, the casing body 11 is formed with recesses around the periphery of a back opening thereof with the back ends of the elastic member 11b on the outside further protruding than back ends of the core member 11a on the inside.

The core member 11a has an upper side opening 11e (see FIG. 8) and a lower side opening 11f that are circular in shape and formed in the front wall 11c. The front cover 12 is attached to the front wall 11c of the core member 11a.

The front cover 12 is composed of a cover body 12a, an optically-transparent cover 12b and an infrared filter 12c. The cover body 12a has a rectangular plate shape and is attached to a front of the casing body 11 with a back of the cover body 12a facing the front wall 11c. The cover body 12a has an opening 121 and an opening 122 that are circular in shape and face the opening 11e and the opening 11f of the core member 11a, respectively. The optically-transparent cover 12b has translucency and includes a circular opening 123, and is attached to a front of the cover body 12a with the opening 123 facing the opening 121. The infrared filter 12c has a disk shape and is fitted into the opening 123. The infrared filter 12c is made from, e.g., polyethylene that allows infrared radiation-light only in infrared wavelength band to pass through.

The back cover 14 is attached to a back of the casing body 11. The back cover 14 is configured by combining a cover body 15 and a battery cover 16. The casing body 11 has a rectangular box shape.

The cover body 15 is formed by the two color molding. Specifically, the cover body 15 is formed by covering part of the outside of a core member 15a with an elastic member 15b. The core member 15a is made from polycarbonate, while the elastic member 15b is made from polyester based elastomer. The core member 15a is a rectangular box shape and includes a battery case 15c that is rectangular parallelepiped in shape. The cover body 15 is also formed with a flat plate shaped projection piece 15d on an upper side of the battery case 15c. The projection piece 15d has a magnet case 15e that is a cylindrical recess. The projection piece 15d includes an L-shaped hook 15n that protrudes forward from a top end of the projection piece 15d (see FIG. 8). The magnet case 15e includes an engaging claw 15p (see FIG. 8) that is provided on a periphery of the magnet case 15e and engages with the hook 15n.

The projection piece 15d has peripheral walls 15f that are curved forward from top, left and right ends thereof. The elastic member 15b covers a back of the projection piece 15d and respective outsides of the peripheral walls 15f. Front ends of the elastic member 15b are longer towards the front than respective front ends of the peripheral walls 15f. That is, the projection piece 15d is formed with recesses around upper, left and right sides of the projection piece 15d with the front ends of the elastic member 15b on the outside further protruding than front ends of the core member 15a on the inside. A flat plate shaped projection piece 15g is formed on a lower side of the battery case 15c. The projection piece 15g has a recess 15h that is rectangular parallelepiped in shape.

The battery cover 16 is formed by the two color molding. Specifically, the battery cover 16 is formed by covering part of the outside of a core member 16a with an elastic member 16b. The core member 16a is made from polycarbonate, while the elastic member 16b is made from polyester based elastomer. The core member 16a has a rectangular plate shape and includes a back wall 16c and peripheral walls 16d. The back wall 16c is rectangular in shape and the peripheral walls 16d protrude forward from bottom, left and right ends of the back wall 16c. The elastic member 16b covers a back of the back wall 16c and respective outsides of the peripheral walls 16d. Front ends of the elastic member 16b are longer towards the front than respective front ends of the peripheral walls 16d. That is, the battery cover 16 is formed with recesses around bottom, left and right sides of the battery cover 16 with the front ends of the elastic member 16b on the outside further protruding than front ends of the core member 16a on the inside.

The battery cover 16 is attached to the cover body 15 with the battery cover 16 covering the battery case 15c. That is, the battery cover 16 is slid from bottom to top with the battery cover 16 facing the battery case 15c. As a result, an L-shaped hook 16e provided at a center of a top end of the battery cover 16 engages with an engaging claw 15i (see FIG. 8) provided at a bottom end of the cover body 15, and thereby the battery cover 16 is attached to the cover body 15. The battery cover 16 also has a plate-shaped wall 16f in the left-right direction on a front of the back wall 16c. The wall 16f is fitted into the recess 15h (see FIG. 8) when the battery cover 16 is attached to the cover body 15.

Pressing around a center of the top end of the battery cover 16 with a finger or the like enables release of the engagement between the hook 16e and the engaging claw 15i. The battery cover 16 is then slid downward, thereby making it possible to remove the battery cover 16 from the cover body 15.

The battery case 15c has a space for accommodating batteries. Spring electrodes 102a and 102b and a spring electrode 102c configured to be in contact with both electrodes of the batteries 102 are disposed at both ends of the battery case 15c in a lengthwise direction thereof. The batteries are two size AA batteries in the electric device A1 according to the embodiment, but may be size D batteries, size C batteries, size AAA batteries or the like. One or three or more batteries may be employed in the electric device A1 according to the embodiment.

A magnet unit 6 is housed in the magnet case 15e of the cover body 15. The magnet unit 6 is composed of a yoke (magnet holder) 6a, a magnet 6b and a magnet cover 6c. The yoke 6a is cylindrical in shape and one end thereof is closed. The yoke 6a is composed of a front base 61 that is circular in shape, and a peripheral wall 62 protruding from a periphery of the front base 61, thereby having a recess 63 that is cylindrical in shape. A boss 64 is provided on a front of the front base 61 (see FIG. 1). The boss 64 has an internal thread 65 in the front-back direction on a center thereof (see FIG. 1). The magnet 6b (e.g., neodymium magnet) has a disk shape and is disposed inside the recess 63 with the magnet 6b sandwiched between a bottom of the recess 63 and the magnet cover 6c having a disk shape. The recess 63 has an inner diameter slightly larger than an outer diameter of the magnet 6b. The yoke 6a surrounds a front and a peripheral side of the magnet 6b. That is, the yoke 6a covers the magnet 6b other than a back thereof. The magnet cover 6c is an elastic member made from polyester based elastomer and is adhered to a periphery of an opening of the recess 63. The peripheral wall 62 of the yoke 6a has an exposed ring end face 66 at a side of a back end surface of the magnet unit 6. The magnet cover 6c having the disk shape is disposed inside the end face 66. Note that the magnet cover 6c is provided in order to protect the magnet 6b, but may be omitted.

The cover body 15 has a boss 15q (see FIG. 1) on a front of the magnet case 15e, and a recess 15r in an end face of the boss 15q. The recess 15r has a through hole 15j that is provided in a bottom of the recess 15r along an axial direction of the boss 15q. A screw 101 is fastened into the internal thread 65 of the yoke 6a with the screw 101 inserted into the through hole 15j from the front. The magnet unit 6 is fixed inside the magnet case 15e of the cover body 15 with a tip of the screw 101 being in contact with a front of the magnet unit 6 (see FIG. 1).

The elastic member 15b covers an opening edge 15k of the magnet case 15e in the cover body 15. The opening edge 15k is formed into a concave surface that is inclined forward with the concave surface curved towards a center of the magnet case 15e. The magnet cover 6c also has a back 67 formed into a concave surface. The opening edge 15k, the end face 66 of the peripheral wall 62 and the back 67 of the magnet cover 6c (exposed surface behind magnet case 15e) constitute a recess 8 having one continuous curved surface. The opening edge 15k forms a periphery of the recess 8. That is, the elastic member 15b forms the periphery of the recess 8.

The main substrate 2, the sensor unit 3 and the mirror 4 are housed in the casing body 11 (see FIGS. 2 and 8).

The sensor unit 3 is composed of an infrared sensor 32, and a sensor substrate 31 which is rectangular in shape and on which the infrared sensor 32 is mounted. The front wall 11c has a pair of pinching members 11g with elasticity on a back of the front wall 11c (see FIG. 2). The sensor unit 3 is attached to the casing body 11 with the pair of pinching members 11g pinching the infrared sensor 32.

The infrared sensor 32 is a pyroelectric infrared sensor. The infrared sensor 32 has a sensing surface that is disposed upward so as to face a lower end of the opening 11e. The front wall 11c has a plate-shaped rib 11h on a back thereof. The rib 11h has a slope and is formed behind the opening 11e. The rib 11h faces the sensing surface of the infrared sensor 32 in the up-down direction. The mirror 4 is disposed on the slope of the rib 11h. That is, the sensing surface of the infrared sensor 32 faces the mirror 4. When infrared radiation enters via the infrared filter 12c and the openings 121 and 11e, the infrared radiation is reflected by the mirror 4, and then enters the sensing surface of the infrared sensor 32. The infrared sensor 32 then outputs an electric signal-a sensing signal in accordance with infrared irradiance. The sensor substrate 31 is electrically connected to the main substrate 2 via signal wires, and therefore the sensing signal of the infrared sensor 32 is provided to a controller circuit provided on the main substrate 2. The controller circuit is configured to transmit a wireless signal containing image data captured by the image capture unit 5 through the wireless communication circuit when determining human presence based on the sensing signal

The front wall 11c is provided with pillar-shaped ribs 11i on the back thereof (see FIG. 7). The main substrate 2 is disposed in the casing body 11 with a front of the main substrate 2 being in contact with respective tips of the ribs 11i. The image capture unit 5 is mounted on the front of the main substrate 2, and allowed to capture an image in front thereof via the openings 11f and 122 and the optically-transparent cover 12.

The front wall 11c is further provided with a pair of pillar-shaped bosses 11j on the back thereof (see FIG. 7). The main substrate 2 has holes 2a in respective places thereof facing the respective tips of the bosses 11j (see FIGS. 2). The bosses 11j have respective internal threads that are formed in their respective tips along an axial direction thereof. The cover body 15 has a pair of through holes in a bottom of the battery case 15c. Two screws 103 are inserted into the pair of through holes from the back to pass through the pair of holes 2a of the main substrate 2 and then screwed into the internal threads of the bosses 11j, and thereby the cover body 15 is attached to the casing body 11.

The cover body 15 has pillar-shaped ribs 15s on a front of the core member 15a (see FIGS. 2 and 7). When the cover body 15 is attached to a back of the casing body 15, the main substrate 2 is housed in the casing body 11 with a back of the main substrate 2 being in contact with respective tips of the ribs 15s.

The back cover 14-the cover body 15 and the battery cover 16 are attached to the casing body 11. In this case, the front ends of the elastic member 15b and the front ends of the elastic member 16b in the back cover 14 come into contact with the back ends of the elastic member 11b in the casing body 11 with the elastic member 11b and the elastic member 15b and 16b adhered to each other in a compressed state. This makes it difficult to see the boundary between the casing body 11 and the back cover 14 in appearance, thereby providing seamless structure.

Thus, it is possible to suppress occurrence of a gap-seam in the boundary between the casing body 11 and the back cover 14, thereby preventing dust adhesion and providing excellent design.

Note that each material of the elastic members 11b, 15b and 16b is not limited to polyester based elastomer. In addition, each material of the core members 11a, 15a and 16a is not limited to polycarbonate.

The holding member B1 will hereinafter be explained. The holding member B1 is hemispherical in shape and has a hollow inside. The holding member B1 includes a hemispherical connection unit 71 and a disk-shaped base 72 (see FIG. 3).

The connection unit 71 has a convex curved surface and is provided with a circular opening 71b in a bottom thereof. Specifically, the connection unit 71 is made of iron and has the shape of a hemispherical bowl. The connection unit 71 may be made of magnetic material other than iron as long as the material displays magnetism (preferably ferromagnetism). A bracket 75 is made from resin and housed in the connection unit 71. As shown in FIG. 1, the bracket 75 is provided with a cylindrical boss 75f on an inside center of a base 75a having the shape of a hemispherical bowl. The boss 75f has a recess 75h in an end face thereof. A though hole 75g is formed in a bottom of the recess 75h along an axial direction of the boss 75f. An internal thread 71a is formed in a center of the bottom of the connection unit 71. The bracket 75 is fixed to the connection unit 71 with a screw 105 passing through the though hole 75g from the back screwed into the internal thread 71a.

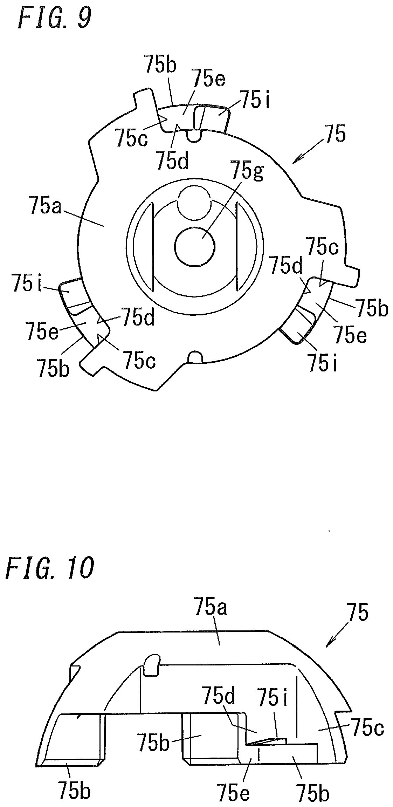

The bracket 75 has three first hooks 75b at 120 degree intervals around a periphery of the base 75a (see FIGS. 9 and 10). Each first hook 75b forms a circular arc along the periphery of the base 75a, and has an L-shaped cross section. Each first hook 75b is composed of a first elongated piece 75d and a second elongated piece 75e. The first elongated piece 75d has a plate shape and is elongated backward from the periphery of the base 75a. The second elongated piece 75e has a plate shape and is elongated from an end of the first elongated piece 75d outside the base 75a. The bracket 75 is further formed with a stopper 75c that closes both sides of an end of the first elongated piece 75d in a circumferential direction of the base 75a and an end of the second elongated piece 75e in the circumferential direction. A cuneate protrusion 75i is formed on a front of the second elongated piece 75e. The protrusion 75i has a slope on an end thereof in the circumferential direction.

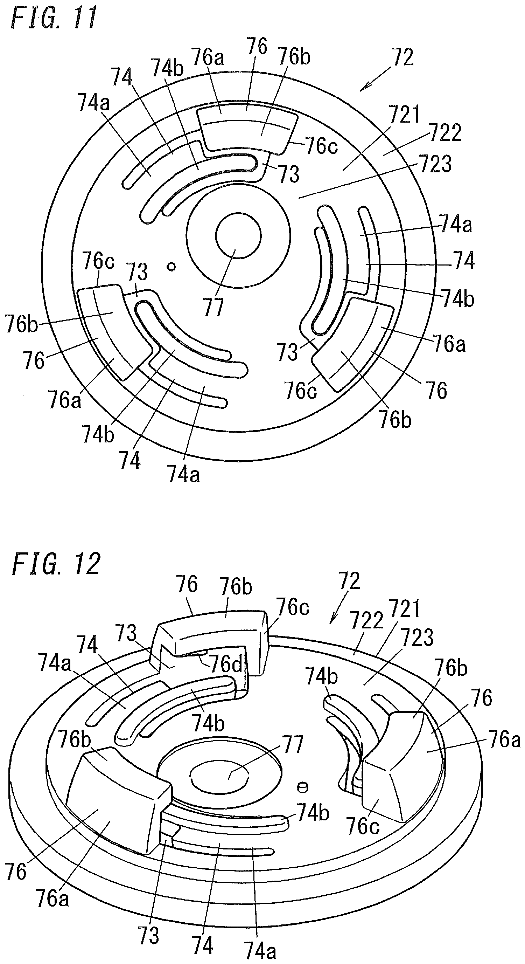

As shown in FIGS. 11 and 12, the base 72 includes a disk-shaped base body 721. The base 72 has a peripheral part 722 and a central part 723. The peripheral part 722 has a thickness thinner than that of the central part 723. Three openings 73 are formed in a periphery of the central part 723 at 120 degree intervals as viewed from a center of the base body 721. Each opening 73 forms a circular arc. A spring piece 74 is elongated from a first end of each opening 73 in a peripheral direction thereof. The spring piece 74 forms a circular arc. The spring piece 74 is composed of a plate spring 74a and a linear projection 74b. The projection 74b is formed along an inner periphery of the plate spring 74a and protrudes forward. An end of the projection 74b in the peripheral direction is further elongated than a tip of the plate spring 74a in the peripheral direction.

A second hook 76 is formed on a second end of each opening 73 in the peripheral direction. The second hook 76 forms a circular arc and has an L-shaped cross section. The second hook 76 includes a third elongated piece 76a and a fourth elongated piece 76b. The third elongated piece 76a has a plate shape and is elongated forward from an outer periphery of each opening 73. The fourth elongated piece 76b has a plate shape and is elongated from an end of the third elongated piece 76a inside the base 72. The second hook 76 further includes a stopper 76c that closes both sides of an end of the third elongated piece 76a in the peripheral direction and an end of the fourth elongated piece 76b in the peripheral direction. A cuneate protrusion 76d is formed on a back of the fourth elongated piece 76b. The protrusion 76d has a slope on an end thereof in the circumferential direction.

A through hole 77 is provided in the base 72 on a location deviated from the center of the disk-shaped base body 721 inside a circle formed by the three openings 73. The base 72 is to be fixed to a building surface 300 such as a wall surface with a screw 104 inserted into the through hole 77 from the front and screwed into the building surface 300 (see FIG. 1).

When the connection unit 71 is rotated in a first direction (here, clockwise direction) with an outer edge of the opening 71b of the connection unit 71 being in contact with the peripheral part 722 of the base 72 fixed to the building surface 300, the first hooks 75b is engaged with the second hooks 76, and the connection unit 71 is attached to the base 72.

Specifically, by rotating the connection unit 71 in the first direction with the three first hooks 75b arranged at intervals among the three second hooks 76, the first hooks 75b also rotate in the first direction. The first hooks 75b rotate in the first direction while a back of the second elongated piece 75e is touching respective fronts of the projections 74b. The respective fronts of the second elongated pieces 75e then face the respective backs of the fourth elongated pieces 76b, and the protrusions 75i on the fronts of the second elongated pieces 75e touch and go over the protrusions 76d on the backs of the fourth elongated pieces 76b. The connection unit 71 is rotated in the first direction until respective tips of the first hooks 75b (tips of first elongated pieces 75d and tips of second elongated pieces 75e) come into contact with the stoppers 76c, or respective tips of the second hooks 76 (tips of third elongated pieces 76a and tips of fourth elongated pieces 76b) come into contact with the stoppers 75c. As a result, the protrusions 75i on the fronts of the second elongated pieces 75e engage with the protrusions 76d on the backs of the fourth elongated pieces 76b, and thereby the connection unit 71 is attached to the base 72.

In the present embodiment, the protrusions 75i on the fronts of the second elongated pieces 75e go over the protrusions 76d on the backs of the fourth elongated pieces 76b, thereby providing click feeling. The click feeling enables a user to determine whether or not the connection unit 71 is attached to the base 72.

When the connection unit 71 is rotated in a second direction (here, anticlockwise direction), the engagement between the first hooks 75b and the second hooks 76 is released, thereby allowing the connection unit 71 to be detached from the base 72. Also in this case, the protrusions 75i on the fronts of the second elongated pieces 75e go over the protrusions 76d on the backs of the fourth elongated pieces 76b, thereby providing click feeling. The click feeling enables a user to determine whether or not the connection unit 71 is detached from the base 72.

In the embodiment, the through hole 77 is deviated from the center of the base body721. As a result, when the connection unit 71 is attached to and detached from the base 72, a rotation load applied to the base 72 is suppressed, and while the connection unit 71 is rotating, the base 72 is prevented from rotating together-corotation is prevented. Therefore, when the connection unit 71 is attached to and detached from the base 72, a periphery of the base 72 is pressed with a user's finger or the like, thereby preventing the base 72 from rotating to facilitate attachment and detachment of the connection unit 71. Since one screw 104 enables installation onto the building surface 300, it is possible to suppress the occurrence of a crack in the building surface 300 caused by the installation even if the building surface 300 is hard building material.

Linear protrusions 78 are radially formed on a back of the base 72 with the protrusions 78 arranged annularly around a periphery of the through hole 77 (FIGS. 3 and 5). A gap therefore exists between the back of the base 72 and the building surface 300 according to respective thicknesses of the linear protrusions 78. Therefore, even if a head of the screw 104 is stripped, it is possible to easily detach the base 72 from the building surface 300 by inserting a tool such as a slotted screwdriver into the gap between the back of the base 72 and the building surface 300.

Four nibs 79 are further arranged around the periphery of the base 72 on the back at regular intervals (see FIGS. 3 and 5). A gap is therefore formed around the periphery of the base 72 according to respective thicknesses of the nibs 79, thereby making it possible to easily insert the tool such as the slotted screwdriver into the gap between the back of the base 72 and the building surface 300.

A holding structure 100 for holding the electric device A1 with the holding member B1 will hereinafter be explained.

When the recess 8 in a back of the electric device A1 is brought close to the connection unit 71 of the holding member B1, the connection unit 71 displaying magnetism attracts the electric device A1 by magnetic force of the magnet unit 6, and the recess 8 then comes into contact with the connection unit 71. The electric device A1 therefore becomes held by the connection unit 71 displaying magnetism-the magnetic force of the magnet unit 6. When a user gives rotation force to the electric device A1 with the electric device A1 held by the holding member B1 in order to adjust an image capturing direction of the image capture unit 5 and/or a detection direction of the infrared sensor 32 in the electric device A1, the electric device A1 rotates with the recess 8 being in contact with the connection unit 71. Thus, rotating the electric device A1 enables adjusting the installation orientation of the electric device A1.

In the present embodiment, since the holding member B1 holds the electric device A1 by the magnetic force, it is possible to easily adjust the installation orientation of the electric device A1 without troublesome work required when installation orientation of such an electric device A1 is adjusted.

A curved surface of the connection unit 71 has a slightly smaller curvature than a curved surface of the recess 8. The connection unit 71 is therefore in contact with the opening edge 15k as an outer periphery of the recess 8, but hardly in contact with remaining part of the recess 8 (see FIG. 1). Since the elastic member 15b forms the opening edge 15k, making the electric device A1 smoothly rotate when the installation orientation of the electric device A1 is adjusted, and increasing holding force depend on type and hardness of the elastic member 15b. For example, even if the magnet 6b has a weak magnetic force, increasing frictional force by the elastic member 15b enables holding the electric device A1 in position after adjusting the installation orientation of the electric device A1. It is therefore possible to prevent movement from the installed location caused by vibration and easily detach the electric device A1 therefrom.

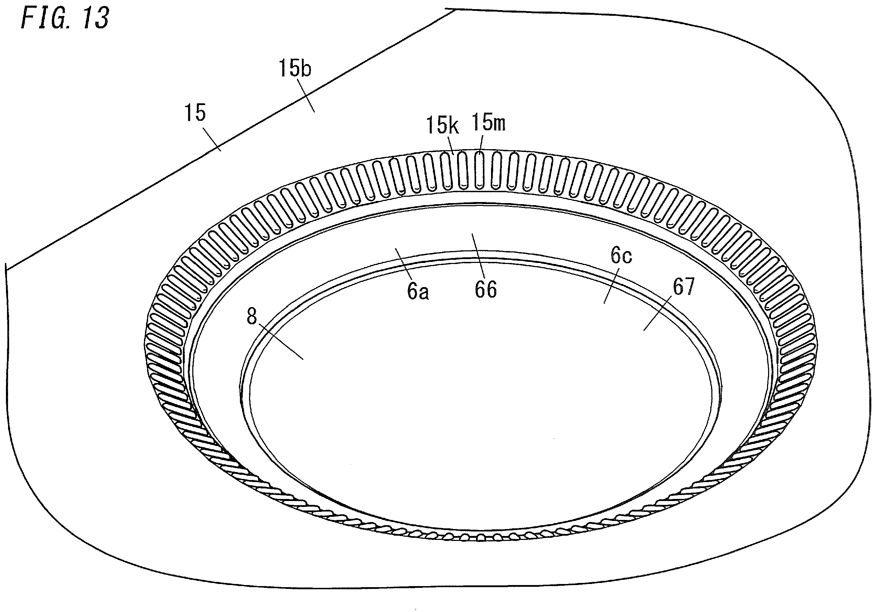

As shown in FIG. 13, ribs 15m are formed on the opening edge 15k. The ribs 15m are formed radially with respect to a center of the recess 8 that is circular in a plan view. Therefore, when the holding member B1 holds the electric device A1, it is possible to prevent movement from the installed location of the electric device A1 even if vibration or the like applies external force in a direction of the rotation to the electric device A1 because the connection unit 71 is in contact with the ribs 15m on the opening edge 15k. It is moreover possible to prevent reduction in the magnetic force as a result of the ribs 15m preventing a change in the magnetic force caused by the movement.

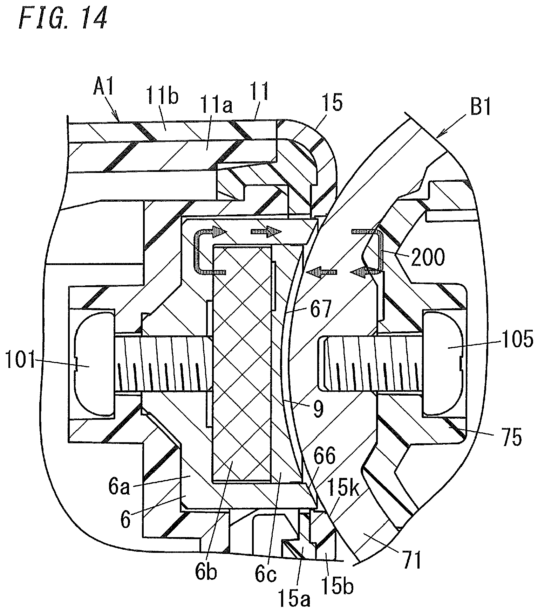

Most of the magnetic flux from the magnet 6b passes through the yoke 6a and is emitted outside the electric device A1 from the end face 66 of the yoke 6a. That is, the holding member B1 is magnetically coupled with the yoke 6a with the holding member B1 facing the recess 8, thereby holding the electric device A1. As shown in FIG. 14, the recess 8 exposes the end face 8 of the yoke 6a that is in contact with or little distance apart from the connection unit 71. As a result, most of the magnetic flux from the end face 66 of the yoke 6a passes through the connection unit 71, and thereby a magnetic pass 200 from the magnet unit 6 is formed.

Therefore, the magnetic flux from the magnet 6b concentrating in a narrow range through the yoke 6a enables the holding structure 100 to have a large attraction force and suppress magnetic flux leakage. It is accordingly possible to suppress influence of the magnetic flux leakage on the electric device A1, other peripheral equipment and a user. In addition, the magnet 6b forming the disk shape enables reduction in processing cost.

The electric device A1 operates using power from the batteries in the battery case 15c, and has a function of transmitting a wireless signal containing image data captured by the image capture unit 5. Such an electric device A1 is provided for watching service for. e.g., the elderly or a child (children). The holding member B1 is fixed to a wall of a dwelling or a room of the elderly or the child, and the electric device A1 is attached to the holding member B1. The image data captured is transmitted to family's smartphone(s), cellular phone(s), tablet terminator(s) and computer(s), or a server managed by a watching service provider. This enables the family or the watching service provider to grasp behavior or state of the elderly or the child.

Specification examples of wireless communication of the electric device A1 include, but not limited to, wireless local area network (LAN) and Bluetooth (registered trademark).

The electric device A1 is not limited to the wireless communication circuit, the image capture device and the sensor device in the embodiment, but may be a device with other functions.

As stated above, the electric device holding structure 100 includes an electric device A1 and a holding member B1 configured to hold the electric device A1. The electric device A1 includes a casing 1 and a magnet unit 6 disposed in the casing 1. The holding member B1 includes a connection unit 71 displaying magnetism. The magnet unit 6 includes a magnet 6b and a yoke 6a. The yoke 6a is magnetically coupled with the magnet 6b to form a magnetic path 200 from the magnet 6b to a surface of the casing 1. The holding member B1 is configured to hold the electric device A1 with the yoke 6a magnetically coupled with the connection unit 71. An elastic member 15b is provided as part of the casing 1 and in contact with the connection unit 71.

Thus, since the holding structure 100 allows the holding member B1 to hold the electric device A1 by magnetic force, it is possible to easily adjust installation orientation of the electric device A1 without troublesome work required when installation orientation of such an electric device A1 is adjusted. In the holding structure 100, making the electric device A1 smoothly rotate when the installation orientation of the electric device A1 is adjusted, and increasing holding force depend on type and hardness of the elastic member 15b. It is therefore possible to not only easily adjust the installation orientation of the electric device A1 but also prevent movement from the installed location caused by vibration.

In the holding structure 100, the electric device A1 is provided with a recess 8 in the surface of the casing. The magnet unit 6 is disposed in the casing 1 with the magnet unit 1 facing the recess 8. The connection unit 71 is formed with a convex surface. The yoke 6a forms a magnetic path from the magnet 6b to the recess 8. The elastic member 15b is provided around a periphery of an inner surface of the recess 8, and the connection unit 71 is in contact with the elastic member 15b with the connection unit 71 facing the elastic member 15b.

With the holding structure 100, the recess is provided at a side of the electric device A1, while part of the convex surface is provided at a side of the holding member B1, thereby enabling the electric device A1 to further smoothly rotate when the installation orientation thereof is adjusted.

In the holding structure 100, the elastic member 15b has a plurality of ribs 15m formed radially around the periphery of the inner surface of the recess 8.

When the holding member B1 holds the electric device A1, it is possible to prevent movement from the installed location of the electric device A1 even if vibration or the like applies external force in a direction of the rotation to the electric device A1 because the connection unit 71 is in contact with the ribs 15m. In the holding structure 100, it is moreover possible to prevent reduction in the magnetic force as a result of the ribs 15m preventing a change in the magnetic force caused by the movement.

In the holding structure 100, the recess 8 may expose part of the yoke 6a.

In this case, magnetic flux from the magnet 6b concentrating in a narrow range through the yoke 6a enables the holding structure 100 to have a large attraction force and suppress magnetic flux leakage.

In the holding structure 100, the connection unit 71 may have an opening 71b that is circular in shape and formed in a bottom of the connection unit 71. The holding member B1 may further include a base 72 that has a disk shape and is attached to the bottom of the connection unit 71. The connection unit 71 may be provided with a first hook 75b formed inside the connection unit 71 along a peripheral direction of the opening 71b. The base 72 may be provided with a second hook 76 formed on a surface of the base 72 along a periphery of the base 72. The holding structure preferably may have structure that allows the connection unit 71 to be relatively rotated with respect to the base 72 with the surface of the base 72 facing the bottom of the connection unit 71 so that the first hook 75b and the second hook 76 engage with each other.

This enables easy assembly of the holding member B1.

Preferably, the base 72 is provided with one through hole 104 allowing a screw 104 to be inserted into, at a position deviated from a center of the base 72.

In this case, pressing the periphery of the base 72 with a user's finger or the like enables preventing rotation of the base 72 when the connection unit 71 is attached to and detached from the base 72 with the base 72 screwed to a building surface 300. That is, the holding structure 100 enables the connection unit 71 to be easily attached to and detached from the base 72. Since one screw 104 enables installation onto the building surface 300, it is possible to suppress the occurrence of a crack in the building surface 300 caused by the installation even if the building surface 300 is hard building material.

Preferably, the base 72 is provided with a protrusion 78 on a surface of the base 72 to face a structure surface 300 around a periphery of the through hole 77.

In this case, a gap exists between a back of the base 72 and the building surface 300 according to a thickness of the protrusion 78. Therefore, even if a head of the screw 104 is stripped, it is possible to easily detach the base 72 from the building surface 300 by inserting a tool such as a slotted screwdriver into the gap between the back of the base 72 and the building surface 300.

The magnet 6b preferably has a flat plate shape.

In this case, the magnet 6b forms a disk shape, thereby enabling reduction in processing cost of the holding structure 100.

An electric device A1 is configured to be held by a holding member B1 including a connection unit 71 displaying magnetism. The electric device A1 includes a casing 1, and a magnet unit 6 disposed in the casing 1. The magnet unit 6 includes a magnet 6b and a yoke 6a. The yoke 6a is magnetically coupled with the magnet 6b to form a magnetic path 200 from the magnet 6b to a surface of the casing 1. An elastic member 15b is provided as part of the casing 1 and configured to be in contact with the connection unit 71.

Thus, since the holding member B1 is to hold the electric device A1 by magnetic force, it is possible to easily adjust installation orientation of the electric device A1 without troublesome work required when installation orientation of such an electric device A1 is adjusted. Moreover, making the electric device A1 smoothly rotate when the installation orientation of the electric device A1 is adjusted, and increasing holding force depend on type and hardness of the elastic member 15b. It is therefore possible to not only easily adjust the installation orientation of the electric device A1 but also prevent movement from the installed location caused by vibration.

Even if a convex shape is provided at a back of the electric device and a recess shape is provided at a front of the holding member, advantages as stated above are obtained.

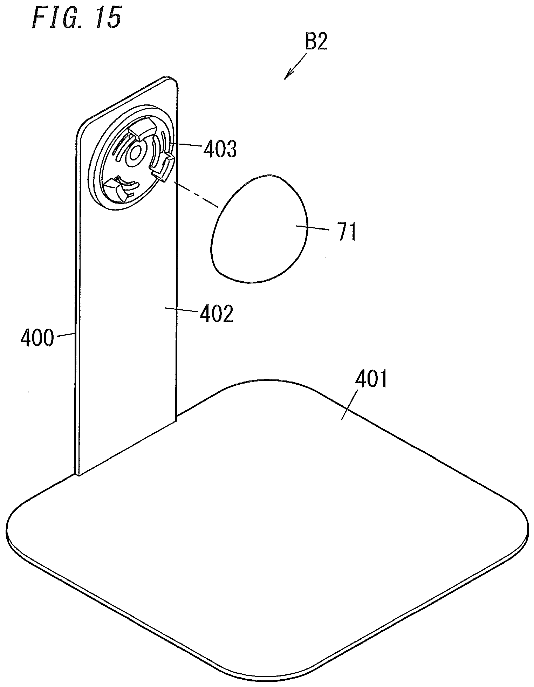

As shown in FIG. 15, a holding member B2 having stand structure may be provided. The holding member B2 includes a bracket 400 and a connection unit 71. The bracket 400 has a base 401 and a leg 402. The base 401 has a plate shape and is to be put on a desk, a floor or the like. The leg 402 is elongated upward from the base 401. Abase 403 is provided on a top end side of the base 401. The base 403 is configured in the same way as the base 72, and allows the connection unit 71 to be attached to. Note that as long as the base 403 is configured to be engaged with a first hook 75b, the base 403 is not limited to a similar configuration to the base 72.

Note that the foregoing description includes merely illustrative examples. Thus, the disclosure is not limited to configurations in the illustrative examples, but various modifications are possible in light of general arrangement and the like and may be made regardless of the configurations without departing from the scope of technical ideas according to the disclosure.

### Reference Signs List

- A1: Electric device
- 1: Casing
- 11: Casing body
- 11a: Core member
- 11b: Elastic member
- 12: Front cover
- 14: Back cover
- 15: Cover body
- 15a: Core member
- 15b: Elastic member
- 15e: Magnet case
- 15k: Opening edge
- 15m: Rib
- 16: Battery cover
- 16a: Core member
- 16b: Elastic member
- 6: Magnet unit
- 6a: Yoke
- 6b: Magnet
- 6c: Magnet cover
- 66: End face
- 2: Main substrate
- 3: Sensor unit
- 4: Mirror
- 5: Image capture unit
- B1, B2: Holding member
- 71: Connection unit
- 71b: Opening
- 72: Base
- 721: Base body
- 75: Bracket
- 75a: Base
- 75b: First hook
- 76: Second hook
- 77: Through hole
- 78: Protrusion
- 8: Recess
- 100: Holding structure
- 201: Magnetic pass
- 300: Building surface

## Claims

1. A holding structure (100), comprising:
an electric device (A1) that includes
a casing (1), and
a magnet unit (6) disposed in the casing (1), the magnet unit (6) including a magnet (6b) and a yoke (6a), the yoke (6a) being magnetically coupled with the magnet (6b) to form a magnetic path from the magnet (6b) to a surface of the casing (1);
a holding member (B1, B2) that includes a connection unit (71) displaying magnetism and is configured to hold the electric device (A1) with the yoke (6a) magnetically coupled with the connection unit (71); and
an elastic member (15b) that is provided as part of the casing (1) and configured to be in contact with the connection unit (71),
wherein
the electric device (A1) is provided with a recess (8) in the surface of the casing (1),
the magnet unit (6) is disposed in the casing (1) with the magnet unit (6) facing the recess (8),
the yoke (6a) forms a magnetic path from the magnet to the recess (8),
the elastic member (15b) is provided around a periphery of an inner surface of the recess (8), and
the connection unit (71) is formed with a convex surface and in contact with the elastic member (15b) with the connection unit (71) facing the elastic member,
wherein the elastic member (15b) has a plurality of ribs (15m) formed radially around the periphery of the inner surface of the recess (8),
wherein the connection unit (71) is in contact with the ribs (15m).

2. The holding structure (100) of claim 1, wherein the recess (8) exposes part of the yoke (6a).

3. A holding structure (100) of any one of claims 1 to 2, wherein
the connection unit (71) has an opening that is circular in shape and formed in a bottom of the connection unit (71), the connection unit (71) being provided with a first hook (75b) formed inside the connection unit (71) along a peripheral direction of the opening,
the holding member (B1, B2) further comprises a base (72) that has a disk shape and is attached to the bottom of the connection unit (71),
the base (72) is provided with a second hook (76) formed on a surface of the base (72) along a periphery of the base (72), and
the holding structure (100) has structure that allows the connection unit (71) to be relatively rotated with respect to the base (72) with the surface of the base (72) facing the bottom of the connection unit (71) so that the first hook (75b) and the second hook (76) engage with each other.

4. The holding structure (100) of claim 3, wherein the base (72) is provided with one through hole (77) allowing a screw to be inserted into, at a position deviated from a center of the base (72).

5. The holding structure (100) of claim 4, wherein the base (72) is provided with a protrusion on a surface of the base (72) to face a structure surface around a periphery of the through hole (77).

6. The holding structure (100) of any one of claims 1 to 5, wherein the magnet has a flat plate shape.

## Patentansprüche

1. Haltestruktur (100), umfassend:
eine elektronische Vorrichtung (A1), die Folgendes umfasst ein Gehäuse (1), und
eine Magneteinheit (6), die in dem Gehäuse (1) angeordnet ist, wobei die Magneteinheit (6) einen Magneten (6b) und ein Joch (6a) umfasst, wobei das Joch (6a) magnetisch mit dem Magneten (6b) verbunden ist, um einen Magnetpfad von dem Magneten (6b) zu einer Oberfläche des Gehäuses (1) zu bilden;
ein Halteelement (B1, B2), das eine Verbindungseinheit (71) umfasst, die Magnetismus anzeigt und ausgestaltet ist, die elektronische Vorrichtung (A1) mit dem Joch (6a) magnetisch gekoppelt mit der Verbindungseinheit (71) zu halten; und
ein elastisches Element (15b), das als Teil des Gehäuses (1) bereitgestellt ist und ausgestaltet ist, mit der Verbindungseinheit (71) in Kontakt zu stehen,
wobei
die elektronische Vorrichtung (A1) in der Oberfläche des Gehäuses (1) mit einer Vertiefung (8) versehen ist,
die Magneteinheit (6) so in dem Gehäuse (1) angeordnet ist, dass die Magneteinheit (6) der Vertiefung (8) zugewandt ist,
das Joch (6a) einen Magnetpfad von dem Magneten zur Vertiefung (8) bildet,
das elastische Element (15b) um einen Umfang einer Innenfläche der Vertiefung (8) vorgesehen ist, und
die Verbindungseinheit (71) mit einer konvexen Oberfläche gebildet ist und mit dem elastischen Element (15b) in Kontakt steht, wobei die Verbindungseinheit (71) dem elastischen Element zugewandt ist,
wobei das elastische Element (15b) mehrere Rippen (15m) aufweist, die radial um den Umfang der Innenfläche der Vertiefung (8) gebildet sind,
wobei die Verbindungseinheit (71) mit den Rippen (15m) in Kontakt steht.

2. Haltestruktur (100) nach Anspruch 1, wobei die Vertiefung (8) einen Teil des Joches (6a) freilegt.

3. Haltestruktur (100) nach einem der Ansprüche 1 bis 2, wobei
die Verbindungseinheit (71) eine Öffnung aufweist, die kreisförmig ist und in einer Unterseite der Verbindungseinheit (71) gebildet ist, wobei die Verbindungseinheit (71) mit einem ersten Haken (75b) versehen ist, der innerhalb der Verbindungseinheit (71) entlang einer Umfangsrichtung der Öffnung gebildet ist,
das Halteelement (B1, B2) ferner eine Basis (72) umfasst, die scheibenförmig ist und an der Unterseite der Verbindungseinheit (71) befestigt ist,
die Basis (72) mit einem zweiten Haken (76) versehen ist, der an einer Oberfläche der Basis (72) entlang eines Umfangs der Basis (72) gebildet ist, und
die Haltestruktur (100) eine Struktur aufweist, die es der Verbindungseinheit (71) ermöglicht, relativ zu der Basis (72) gedreht zu werden, wobei die Oberfläche der Basis (72) der Unterseite der Verbindungseinheit (71) derart zugewandt ist, dass der erste Haken (75b) und der zweite Haken (76) ineinandergreifen.

4. Haltestruktur (100) nach Anspruch 3, wobei die Basis (72) an einer Position, die von der Mitte der Basis (72) abweicht, mit einem Durchgangsloch (77) versehen ist, in das eine Schraube eingesetzt werden kann.

5. Haltestruktur (100) nach Anspruch 4, wobei die Basis (72) an einer Oberfläche der Basis (72) mit einem Vorsprung versehen ist, der um einen Umfang des Durchgangsloches (77) einer Strukturfläche zugewandt ist.

6. Haltestruktur (100) nach einem der Ansprüche 1 bis 5, wobei der Magnet eine flache Plattenform aufweist.

## Revendications

1. Structure de maintien (100) comprenant :
un dispositif électrique (A1) qui comprend :
un carter (1), et
une unité magnétique (6) disposée dans le carter (1), l'unité magnétique (6) comprenant un aimant (6b) et une culasse (6a), la culasse (6a) étant magnétiquement couplée avec l'aimant (6b) afin de former une trajectoire magnétique allant de l'aimant (6b) jusqu'à une surface du carter (1) ;
un élément de maintien (B1, B2) qui comprend une unité de raccordement (71) affichant un magnétisme et est configuré pour maintenir le dispositif électrique (A1) avec la culasse (6a) magnétiquement couplée avec l'unité de raccordement (71) ; et
un élément élastique (15b) qui est prévu comme faisant partie du carter (1) et configuré pour être en contact avec l'unité de raccordement (71),
dans laquelle :
le dispositif électrique (A1) est prévu avec un évidement (8) dans la surface du carter (1),
l'unité magnétique (6) est disposée dans le carter (1) avec l'unité magnétique (6) qui fait face à l'évidement (8),
la culasse (6a) forme une trajectoire magnétique allant de l'aimant à l'évidement (8),
l'élément élastique (15b) est prévu autour d'une périphérie d'une surface interne de l'évidement (8), et
l'unité de raccordement (71) est formée avec une surface convexe et en contact avec l'élément élastique (15b) avec l'unité de raccordement (71) qui fait face à l'élément élastique,
dans laquelle l'élément élastique (15b) a une pluralité de nervures (15m) formées radialement autour de la périphérie de la surface interne de l'évidement (8),
dans laquelle l'unité de raccordement (71) est en contact avec les nervures (15m).

2. Structure de maintien (100) selon la revendication 1, dans laquelle l'évidement (8) expose une partie de la culasse (6a) .

3. Structure de maintien (100) selon l'une quelconque des revendications 1 à 2, dans laquelle :
l'unité de raccordement (71) a une ouverture qui a une forme circulaire et est formée dans un fond de l'unité de raccordement (71), l'unité de raccordement (71) étant prévue avec un premier crochet (75b) formé à l'intérieur de l'unité de raccordement (71) le long d'une direction périphérique de l'ouverture,
l'élément de maintien (B1, B2) comprend en outre une base (72) qui a une forme de disque et est fixée au fond de l'unité de raccordement (71),
la base (72) est prévue avec un second crochet (76) formé sur une surface de la base (72) le long d'une périphérie de la base (72), et
la structure de maintien (100) a une structure qui permet à l'unité de raccordement (71) d'être relativement entraînée en rotation par rapport à la base (72) avec la surface de la base (72) qui fait face au fond de l'unité de raccordement (71) de sorte que le premier crochet (75b) et le second crochet (76) se mettent en prise entre eux.

4. Structure de maintien (100) selon la revendication 3, dans laquelle la base (72) est prévue avec un trou débouchant (77) permettant d'y insérer une vis, dans une position déviée d'un centre de la base (72).

5. Structure de maintien (100) selon la revendication 4, dans laquelle la base (72) est prévue avec une saillie sur une surface de la base (72) pour faire face à une surface de structure autour d'une périphérie du trou débouchant (77).

6. Structure de maintien (100) selon l'une quelconque des revendications 1 à 5, dans laquelle l'aimant a une forme de plaque plate.
